# NOUVEAU FASCICULE DE BREVET EUROPEEN

(11) **EP 3 099 967 B2**
(45) Date de publication et mention de la décision concernant l'opposition: **13.11.2024**
(45) Mention de la délivrance du brevet: 08.01.2020
(21) Numéro de dépôt: 15706858.6
(22) Date de dépôt: 27.01.2015
(51) Int. Cl.: F16L 55/128, F16L 55/16

(54) **OUTIL POUR INTERVENTION SUR LA PAROI D'UNE CANALISATION - MÉTHODE ASSOCIÉE**
WERKZEUG ZUR BEARBEITUNG DER WAND EINES ROHRES UND ENTSPRECHENDES VERFAHREN
TOOL FOR WORKING ON THE WALL OF A PIPE AND RELATED METHOD

(30) Priorité: 28.01.2014 FR 1400210
(43) Date de publication de la demande: 07.12.2016
(73) Titulaire: GRTGAZ, 92270 Bois Colombes (FR)
(72) Inventeur: ACKER, Benoit, F-59910 Bondues (FR); LECCHI, Maxime, F-78500 Sartrouville (FR); FERNANDEZ, Charles, François-Albert, F-92360 Meudon (FR); NIERHOFF, Roland, F-93200 Saint Denis (FR)
(74) Mandataire: Cabinet Beau de Loménie
(86) Numéro de dépôt international: PCT/FR2015/050178
(87) Numéro de publication internationale: WO 2015/114243

(56) Documents cités:
- EP-A1- 0 096 958
- EP-A1- 0 114 727
- EP-A1- 0 291 373
- EP-A2- 0 377 141
- WO-A1-2007/141554
- WO-A1-95/07433
- FR-A1- 2 550 846
- US-A1- 2004 003 855

## Description

### Domaine technique

L'invention s'inscrit dans le domaine des outils et méthodes pour l'intervention sur les parois des canalisations pour transport de fluide, telles des canalisations d'hydrocarbures sous forme liquide ou gazeuse, ou encore des canalisations de transport d'eau. Généralement, le fluide (liquide ou gaz) est sous pression pendant l'exploitation du réseau dont fait partie la canalisation. Plus particulièrement, l'intervention a pour objet la réparation de la canalisation, ou encore la soudure d'éléments rapportés sur la canalisation.

Les canalisations concernées peuvent cheminer à l'air libre, ou être des canalisations enterrées voire des canalisations sous-marines. Leurs parois peuvent présenter, au cours de l'exploitation qui doit durer de nombreuses années, des défauts dus à des phénomènes de corrosion ou d'agression mécanique, qui doivent être réparés.

La réparation doit généralement être faite en mettant hors pression un tronçon de la canalisation encadrant le défaut à réparer, tout en maintenant le transit du fluide, car toute interruption aurait des conséquences économiques lourdes pour l'exploitant de la canalisation ou du réseau. De préférence, la réparation est effectuée après évacuation du fluide du tronçon encadrant le défaut (mise hors gaz ou hors eau, par exemple).

De la même manière, quand on souhaite effectuer une soudure sur la paroi extérieure de la canalisation, il est parfois nécessaire de couper la circulation du fluide dans le tronçon concerné, notamment pour éviter un refroidissement trop important de la matière, néfaste à la qualité de la soudure et à sa tenue dans le temps.

On connait des systèmes complexes à utiliser et onéreux de mise hors pression et d'évacuation du fluide, comme les obturateurs en charge et leurs accessoires associés (*stopple*, selle de renfort, perçage en charge, ballons). On connaît aussi des systèmes de bretelle provisoire pour le maintien du transit, complexes dans leur structure et également complexes à manier du fait de leurs implications en termes de sécurité pour les opérateurs.

On connaît aussi le document WO2007141554 qui divulgue un appareil permettant notamment de colmater un défaut en introduisant une conduite interne dans la canalisation, la conduite interne étant positionnée au regard du défaut et un composant expansible disposé autour de la conduite étant activé de manière à gonfler pour venir boucher le défaut de l'intérieur. Une variante de l'appareil est aussi utilisée pour mettre en place une valve dans la canalisation.

Cet appareil implique de laisser en place un outil volumineux dans la canalisation, et est donc peu satisfaisant puisque la canalisation reste partiellement obturée après intervention.

On connaît aussi le document WO03/067134 qui divulgue un appareil pour couper la circulation de fluide (obturer) dans une canalisation à haute pression. L'utilisation de cet appareil implique que la circulation de fluide soit dérivée ou interrompue, ce qui n'est pas satisfaisant.

Enfin, on connait aussi le document EP 0 291 373 qui décrit un appareil pour le traitement d'une paroi d'un tube, ainsi que le document DE 10312606B3 qui décrit un dispositif d'arrêt d'un tronçon de canalisation.

### Définition de l'invention et avantages associés

L'invention propose dans ce contexte un outil pour intervention sur la paroi d'une canalisation de fluide, comprenant un segment de conduite à positionner à l'intérieur de la canalisation au regard d'une zone de la paroi, et un ou plusieurs premiers moyens, ou moyens amont, de création d'une étanchéité entre la paroi de la canalisation et le segment de conduite.

Selon une caractéristique générale, le segment de conduite est constitué de deux cylindres rigides reliés par un soufflet, de plus, il comprend un ou plusieurs deuxièmes moyens, ou moyens aval, de création d'une étanchéité entre la paroi de la canalisation et le segment de conduite pour isoler du fluide circulant une partie extérieure d'un tronçon de la canalisation, entre les deux moyens de création d'une étanchéité,
au moins les premiers ou les deuxièmes moyens de création d'étanchéité sont en deux parties, définissant un sas d'étanchéité entre les deux parties desdits premiers ou deuxièmes moyens de création d'étanchéité.

Grâce à un tel outil, on peut créer une zone (un volume) périphérique étanche dans un tronçon de la canalisation, en vis-à-vis et au contact de la zone (la surface) de la paroi sur laquelle on souhaite intervenir.

Cette zone étanche est isolée du fluide circulant, ce qui peut être avantageux sur le plan thermique dans la perspective d'une intervention de type soudure sur la paroi. Mais la zone étanche peut aussi faire l'objet, si nécessaire, d'une décompression voire d'un vidage pour effectuer une intervention sur la paroi hors pression voire hors présence du fluide, alors même que le fluide continue de s'écouler à travers le segment de conduite. Ainsi, l'outil permet la réparation d'une canalisation (ou une autre intervention) sans interruption du fonctionnement du réseau, et permet également de réduire les temps d'intervention. La facilité et la fiabilité de l'utilisation rendent cet outil particulièrement intéressant par rapport aux systèmes de l'art antérieur discutés plus haut. On notera notamment l'absence de système de dérivation externe, un tel système étant rendu inutile par la présence du segment de conduite interne à l'outil.

Les sas définis par les deux parties permettent d'obtenir une amélioration de la sécurité, en particulier pour des applications dans lesquelles les pressions sont importantes. Tel est notamment le cas pour les réseaux de transport de gaz où les pressions peuvent atteindre 67 bars. La sécurité offerte par l'outil est alors renforcée, ainsi que la fiabilité du processus d'intervention.

Dans un mode de réalisation particulier, les premiers ou les deuxièmes moyens de création d'une étanchéité comprennent des joints d'étanchéité expansibles et rétractables, par exemple gonflés à l'huile via un accumulateur huile/azote, ou à expansion par compression via un système de flasques mobiles.

Dans un mode de réalisation avantageux, l'outil comprend de plus des moyens de propulsion dans la canalisation réglables. Ils peuvent être commandables, et par ailleurs être agencés pour utiliser le déplacement du fluide pour profiter d'un phénomène d'entrainement et déplacer l'outil. Les moyens de propulsion peuvent comprendre au moins un volet réglable installé dans le segment de conduite. Les moyens de propulsion peuvent par exemple être actionnés pour leur réglage et leur commande, grâce à un système hydraulique alimenté par un accumulateur huile/azote, grâce à un système électromécanique alimenté par batteries, on encore grâce une combinaison des ces systèmes.

Dans certains modes de réalisation, l'outil peut comprendre de plus un système de guidage de l'outil à l'intérieur de la canalisation. Le système de guidage peut comprendre notamment au moins un galet ou un disque déformable à chaque extrémité du segment de conduite.

Le segment de conduite comprend un soufflet pour circuler dans des canalisations courbes.

Avantageusement, l'outil peut comporter un système de freinage et/ou un système de maintien de l'outil en position par contact avec la paroi interne de la canalisation. Ce système de freinage et/ou de maintien en position peut fonctionner par frottement sur la paroi interne de la canalisation, contact avec la paroi interne, ou par freinage des galets de guidage. Dans un mode de réalisation, l'outil peut également comporter un système de ralentisseur permettant de ralentir le déplacement de l'outil sans être capable de l'arrêter. Ce système peut par exemple être de type électromagnétique.

Avantageusement, l'outil peut également comporter un système de communication permettant la localisation et le contrôle (ou pilotage) de l'outil à distance depuis l'extérieur de la canalisation utilisant par exemples des ondes électromagnétiques ou des ondes sonores.

Avantageusement, mais optionnellement, les systèmes d'étanchéité peuvent être configurés pour freiner le déplacement de l'outil par frottement sur la paroi interne de la canalisation et/ou pour maintenir l'outil en position par contact avec la paroi interne de la canalisation.

L'invention propose aussi une méthode d'intervention sur la paroi d'une canalisation de fluide à l'aide d'un outil selon l'invention, comprenant une étape de déplacement de l'outil à l'intérieur de la canalisation jusqu'au positionnement du segment de conduite à l'intérieur de la canalisation au regard d'une zone de la paroi de ladite canalisation, une étape de création de l'étanchéité en amont et en aval de ladite zone à l'aide respectivement des premiers et deuxièmes moyens de création d'étanchéité pour rendre étanche une partie extérieure d'un tronçon de la canalisation autour de la zone de la paroi (ou rendre étanche un volume délimité par l'outil et la canalisation), puis, si nécessaire, une étape de décompression de ladite partie (ou dudit volume). Finalement, la méthode comprend une étape d'intervention sur ladite zone de la paroi.

Au moins les premiers ou les deuxièmes moyens de création d'étanchéité sont en deux parties, définissant un sas d'étanchéité entre les deux parties desdits premiers ou deuxièmes moyens de création d'étanchéité. Selon une caractéristique générale, le segment de conduite est constitué de deux cylindres rigides reliés par un soufflet.

L'intervention a préférentiellement lieu depuis l'extérieur de la conduite, par un opérateur humain ou un appareil.

Dans les modes de réalisation dans lesquels les premiers ou les deuxièmes moyens d'étanchéité sont expansibles et rétractables, ceux-ci sont actionnés en expansion pour créer l'étanchéité et rétractés après l'intervention.

Dans certains modes de réalisation, l'outil est propulsé par le déplacement du fluide.

Dans certains modes de réalisation, le déplacement de l'outil dans la canalisation et l'actionnement des moyens d'étanchéité sont contrôlés à distance.

Dans un mode de réalisation, le positionnement est effectué à l'aide d'une butée placée à l'intérieur de la canalisation, le procédé comprenant une étape préalable de percement en charge de la canalisation pour la mise en place de la dite butée.

Dans un mode de réalisation particulier, la décompression de la partie extérieure en regard de la zone qui doit faire l'objet d'une intervention est effectuée à l'aide d'une vanne, le procédé comprenant une étape préalable de percement sous charge de la canalisation pour la mise en place de ladite vanne.

Dans un mode de réalisation, un dispositif de freinage, qui peut inclure ou être inclus dans les systèmes d'étanchéité agissant par frottement, peut être utilisé pour freiner le déplacement de l'outil avant qu'il n'atteigne la butée.

Dans un mode de réalisation, un dispositif ralentisseur peut être utilisé pour ralentir le déplacement de l'outil sans nécessairement l'arrêter.

Dans un mode de réalisation, un système de maintien en position, qui peut inclure ou être inclus dans les systèmes d'étanchéité, peut être utilisé pour maintenir l'outil en position par contact avec la paroi interne de la canalisation.

Enfin on précise que l'étape d'intervention peut comprendre entre autres une réparation par pastille soudée, une réparation par rechargement ou une soudure d'un élément rapporté sur la canalisation.

Dans un mode de réalisation, la méthode comprend une décompression de chacun des sas à l'aide d'une vanne.

### Liste des figures

La présentation de l'invention va maintenant être poursuivie en relation avec les figures annexées.
La figure 1 présente une vue de trois-quarts de l'outil selon un mode de réalisation non couvert par la portée des revendications.
La figure 2 présente une coupe longitudinale de l'outil de la figure 1.
La figure 3 présente la même coupe, le volet de propulsion étant ouvert.
La figure 4 présente le déplacement de l'outil de la figure 1, non couvert par la portée des revendications, dans une canalisation.
La figure 5 présente le positionnement de l'outil bloqué par une butée dans la canalisation, pour la réparation.
La figure 6 présente l'outil dans la position de la figure 5, une fois l'étanchéité mise en place.
La figure 7 présente la réparation de la paroi de la canalisation, une fois la mise hors pression effectuée.
La figure 8 présente le départ de l'outil, une fois la réparation effectuée et la butée écartée.

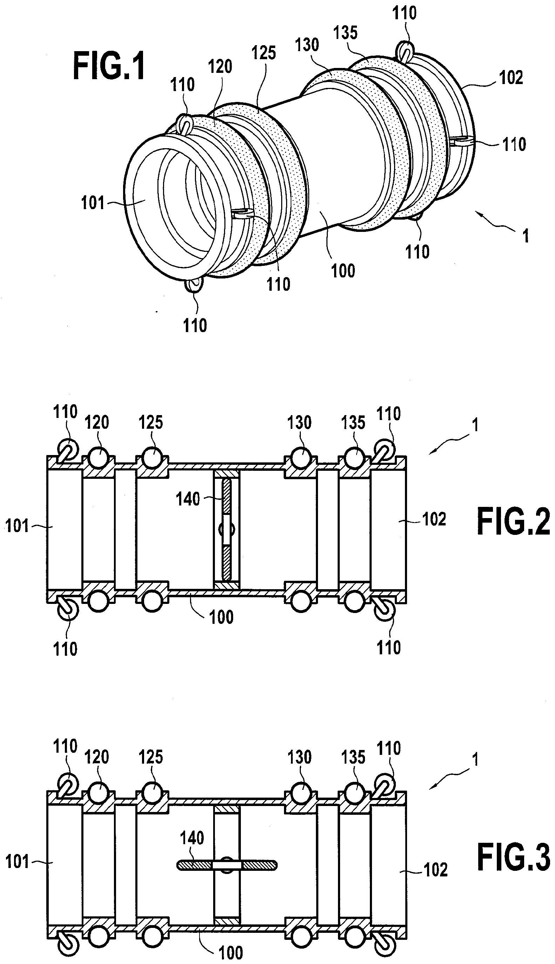

La **figure 1** présente un outil 1 selon un mode de réalisation non couvert par la portée des revendications car son segment de conduite ne comprend pas deux cylindres rigides reliés par un soufflet, vu de trois-quarts. Il est composé d'un segment de conduite 100, qui est ici un cylindre rigide à base circulaire dont les embouchures 101 et 102, qui sont ouvertes, sont planes dans des plans perpendiculaires à l'axe du cylindre et constituent donc des cercles.

### Liste des figures

### Description détaillée

L'extérieur du segment de conduite 100 porte, à proximité de l'embouchure 101, des galets de guidage 110 (ou roulettes de guidage) disposés de manière régulière sur la circonférence, par exemple dans un même plan. Ils sont dans l'exemple représenté au nombre de quatre Des moyens de guidage similaires, ici d'autres galets de guidage 110, sont présents à proximité de l'embouchure 102. D'autres moyens de guidage pourraient être utilisés, comme par exemple des disques de guidage. Des moyens de guidage de différents types peuvent être combinés.

Toujours à proximité de l'embouchure 101, sur l'extérieur du segment de conduite, est présent un premier joint d'étanchéité gonflable 120. Ce joint d'étanchéité gonflable 120 est destiné, lorsqu'il est gonflé, à être plaqué contre la paroi interne de la canalisation dans laquelle l'outil circule. Le joint peut à l'inverse être replié contre le segment de conduite 100 lorsqu'il est dégonflé. Ce joint d'étanchéité gonflable 120 constitue un corps de révolution, ayant un profil circulaire ou non circulaire, par exemple un corps torique ayant pour axe de révolution l'axe de révolution du segment de conduite, et enserrant celui-ci. Ce joint d'étanchéité gonflable 120 peut être gonflé grâce à un système hydraulique, pilotable à distance, comprenant un accumulateur huile/azote. Il est suivi sur le segment de conduite, à une petite distance en se déplaçant vers la deuxième embouchure 102, par un deuxième joint d'étanchéité gonflable 125, similaire au premier et enserrant également le segment de conduite 100. Toujours en se déplaçant vers la deuxième embouchure 102, c'est un troisième joint d'étanchéité gonflable 130 qui est présent, à nouveau similaire aux deux premiers. Un quatrième joint d'étanchéité gonflable 135 est enfin présent, à l'approche de la deuxième embouchure 102. La distance entre les troisième et quatrième joints d'étanchéité gonflables 130 et 135 est similaire voire identique à celle entre les premier et deuxième joints d'étanchéité gonflables 120 et 125 alors que la distance entre les deuxième et troisième joints d'étanchéité gonflables 125 et 130 est plus grande.

D'autres moyens d'étanchéité peuvent être utilisés, comme des joints d'étanchéité à expansion par compression ou des joints toriques ou à lèvre pouvant s'expanser pour être plaqués contre la paroi interne de la canalisation. Les joints à expansion par compression peuvent comprendre des éléments en élastomère pouvant être expansés par un mécanisme à vis sans fin ou un système hydraulique comprenant des flasques mobiles plans, ou coniques, et permettant de mettre en compression les éléments en élastomère.

Selon l'invention, au lieu d'être constitué essentiellement d'un cylindre rigide, le segment de conduite est constitué de deux cylindres rigides reliés par un soufflet, pour permettre à l'outil de circuler dans une canalisation présentant des courbes, comme des coudes.

En **figure 2**, on retrouve les éléments présentés en relation avec la figure 1, dans une vue de coupe passant par l'axe de révolution de l'outil 1. On visualise que les quatre joints d'étanchéité gonflables sont installés dans des gorges prévues à cet effet à la surface du segment de conduite 100. On visualise aussi que les galets de guidage 110, qu'ils soient à proximité de l'embouchure 101 ou de l'embouchure 102, sont tous configurés dans une même direction, pour faciliter la circulation de l'outil dans une canalisation dans une direction particulière. Ces galets peuvent avoir un débattement radial pour garantir un bon guidage malgré les variations géométriques rencontrées sur les canalisations (tolérances de fabrication des tubes, soudures, cintres, déformation locales...). On précise de plus que dans le mode de réalisation présenté, les moyens de guidage 110 sont entre l'embouchure correspondante (resp. 101, 102) et le plus proche des joints d'étanchéité gonflables (resp. 120, 135), mais les moyens de guidage pourraient être positionnés ailleurs sur l'outil.

L'outil comprend de plus des moyens de propulsion qui sont ici constitués notamment d'un volet réglable 140 placé à mi-distance des deux embouchures 101 et 102 dans l'intérieur du segment de conduite 100. Ce volet 140 est visible en figure 2 dans sa position fermé, qui permet un entraînement maximal de l'outil par le fluide, et en **figure 3** dans sa position ouvert, qui limite au maximum l'entrainement et facilite l'arrêt de l'outil. Le volet 140 est motorisé, pour passer de l'une à l'autre des deux positions ou pour adopter une position intermédiaire, et pour conserver la position adoptée lors du déplacement de l'outil dans le flux. Il assure donc, en fonction de son taux d'ouverture une « prise au vent » variable. Le volet 140 permet donc à l'outil 1 de se mouvoir dans la canalisation, avec le fluide, dans la même direction que celui-ci, en utilisant le déplacement du fluide pour profiter d'un phénomène d'entrainement. L'outil 1 comprend aussi un système de motorisation pour le volet 140, ou les volets si plusieurs volets sont utilisés, et éventuellement, mais pas nécessairement, une source d'énergie embarquée. On précise qu'à la place du ou des volets, un ou des diaphragmes, ou une ou des grilles réglables peuvent être utilisés. Par ailleurs, le système est conçu pour être localisable et contrôlable (ou pilotable) à distance au moyen d'un système de communication entre l'outil et l'extérieur du tube.

L'outil 1 peut de plus comprendre un ralentisseur électromagnétique (non représenté) agissant sur les galets ne permettant pas un arrêt total du déplacement de l'outil mais une diminution de sa vitesse.

L'outil 1 peut également comprendre un système de freinage par frottement sur la paroi interne de la canalisation (non représenté).

L'outil 1 peut aussi comprendre un système de maintien de l'outil en position statique dans la canalisation par adhérence avec la paroi interne de la canalisation une fois l'outil arrêté à la position dans laquelle une intervention doit être effectuée.

Les moyens d'étanchéité peuvent être utilisés afin de freiner le déplacement de l'outil par frottement sur la paroi interne de la canalisation.

Les moyens d'étanchéité peuvent aussi être utilisés afin de maintenir l'outil en position par contact avec la paroi interne de la canalisation.

A l'inverse, un système de freinage de l'outil distinct des moyens d'étanchéité peut être utilisé. Il peut s'agir par exemple d'un joint sacrificiel, qui est changé entre deux utilisations de l'outil, ou de patins en contact avec la paroi de la canalisation ou encore de roulettes (ou galets) roulant sur la paroi de la canalisation et disposant de freins.

Un système de maintien en position de l'outil distinct des moyens d'étanchéité peut aussi être utilisé. Il peut s'agir par exemple de mors métalliques.

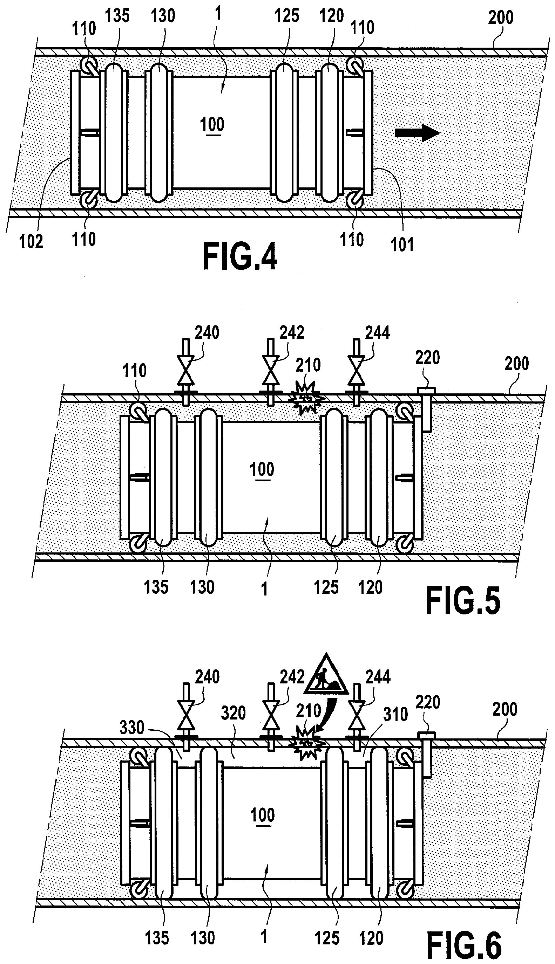

En **figure 4**, on a représenté l'outil 1 se déplaçant dans une canalisation 200 de transport de fluide. Le fluide peut être un liquide ou un gaz. La canalisation peut être enterrée, à l'air libre, ou cheminer sous la mer ou sous un lac.

L'outil a été préalablement introduit par une gare de lancement (non représentée), qui est un équipement de la canalisation qui permet d'introduire, classiquement, des outils de nettoyage ou d'inspection dans la canalisation. Avant que l'outil soit introduit, on a vérifié que la canalisation 200 était pistonnable, c'est-à-dire qu'un tel objet peut y circuler sans y rester bloqué. L'outil 1 a un diamètre externe qui lui permet de circuler dans la canalisation 200, les moyens de guidage 110 étant en contact pour le guidage avec la surface intérieure de la paroi de la canalisation 200. L'outil est mu par le courant de fluide s'écoulant dans la canalisation, à une vitesse qui dépend du niveau d'ouverture du volet 140 et du débit de fluide. Le fluide s'écoule à la fois autour de l'outil 1, et à l'intérieur du segment de conduite 100.

En **figure 5**, on a présenté l'outil 1 s'arrêtant au niveau d'un défaut 210 de la paroi de la canalisation 200 à réparer. L'arrêt est obtenu car l'outil 1 rencontre, au niveau de son embouchure 101 une butée 220 qui a préalablement été mise en place sur la canalisation 200 depuis l'extérieur de celle-ci. Dans un mode de réalisation, la butée 200 a été mise en place par le biais d'un piquage en charge. Le procédé peut comprendre le soudage d'une prise sur la canalisation puis le percement de la prise alors que la canalisation est sous pression de fluide. Ici, on implante une tige métallique dans le piquage, qui forme une butée dans l'intérieur de la canalisation pour un objet du diamètre de l'outil 1.

La butée a été positionnée sur la canalisation 200 de sorte que le défaut 210 soit en regard de la section du segment de conduite 100 comprise entre les joints d'étanchéité gonflables 125 et 130, une fois l'outil positionné contre la butée. Qui plus est, trois piquages 240, 242 et 244 équipés chacun d'une vanne de décompression ont été pratiqués préalablement, ou une fois l'outil positionné, chacun en face d'une des sections du segment de conduite 100 comprise entre deux joints d'étanchéité gonflables. Ces piquages peuvent être effectués en charge. Une fois l'outil arrêté par la butée 220, le fluide sous pression continue à s'écouler autour de l'outil, ainsi qu'à l'intérieur du segment de conduite 100. On ouvre le volet 140 de manière à diminuer la prise au vent de l'outil 1.

En **figure 6**, on a représenté le gonflage des joints d'étanchéité gonflables 120, 125, 130 et 135 de l'outil 1. Chacun de ces éléments vient entrer en contact avec la paroi de la canalisation pour empêcher le passage de fluide autour du segment de conduite 100. Ainsi, trois zones étanches toriques 310, 320 et 330 sont créées, chacune en face d'un des piquages 240, 242 et 244 équipés de vannes de décompression. Le fluide continue de circuler à l'intérieur du segment de conduite 100.

On procède alors à l'aide des vannes des piquages 240, 242 et 244, à la décompression de chacune des zones étanches toriques 310, 320 et 330, la zone 320 entre les joints d'étanchéité gonflables 125, 130 étant la zone principale où l'intervention va avoir lieu, les deux autres zones 310 et 330 servant de sas d'étanchéité pour s'assurer de l'absence de fuite de fluide vers la zone principale, depuis les zones libres, amont et aval, de la canalisation 200.

On précise ici que bien que le mode de réalisation présenté utilise ainsi deux sas d'étanchéité 310 et 330, de tels sas ne constituent pas des éléments indispensables, et l'invention peut donc être mise en œuvre avec seulement deux joints d'étanchéité gonflables. Néanmoins, on retient le caractère fortement avantageux de la présence de ces sas.

On précise également que bien que le mode de réalisation présenté ici utilise trois piquages, un des deux piquages 240 et 244 peut s'avérer superflu dans le cas où l'outil dispose d'un canal interne permettant la circulation de fluide entre les sas 310 et 330 formés par les joints d'étanchéité.

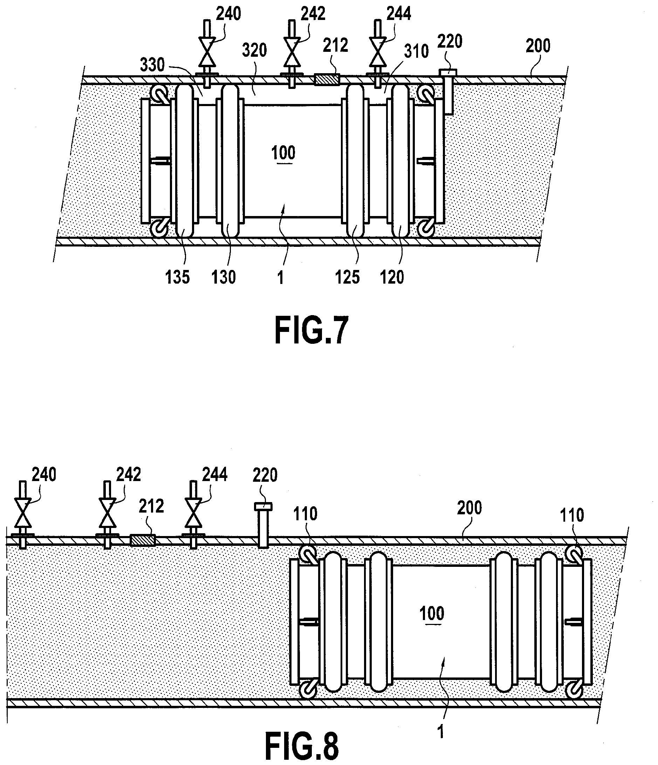

En **figure 7**, on a présenté la réparation 212 du défaut 210, qui peut constituer, par exemple, en une réparation par pastille soudée à la place de la partie défectueuse de canalisation ou une réparation par rechargement ou à un autre type de réparation. Celle-ci est effectuée hors pression, et éventuellement, après évacuation du fluide à travers le piquage 242. La réparation a préférentiellement lieu en mettant en œuvre une intervention depuis l'extérieur de la conduite, par un opérateur humain ou un appareil.

Après le processus de réparation, les joints d'étanchéité gonflables 120, 125, 130 et 135 sont dégonflés, et l'ensemble de la canalisation 200 est donc remise sous pression, y compris les zones 310, 320 et 330. Comme cela apparaît ensuite en figure 8, la butée 220 est déplacée pour ne plus retenir l'outil 1 dans la canalisation et l'outil 1 reprend son cheminement dans le sens d'écoulement du fluide, à une vitesse qui est déterminée par le niveau d'ouverture du volet 140 et le débit du fluide, que l'on ouvre pour pouvoir récupérer rapidement l'outil dans une gare d'arrivée de la canalisation. Il est souhaitable, à ce stade, de condamner les piquages 240, 242 et 244.

L'invention n'est pas limitée aux modes de réalisation décrits, mais s'étend à toutes les variantes dans le cadre de la portée des revendications.

En permettant d'isoler la paroi du fluide, l'outil peut notamment servir à réaliser une opération de soudure sur des canalisations pour lesquelles la convection forcée générée par le fluide occasionnerait un refroidissement trop important qui serait néfaste à la tenue mécanique du cordon de soudure. Ce phénomène peut être rencontré sur certaines canalisations en fonction du diamètre, du débit et de la température du fluide. La soudure peut être effectuée avec ou sans décompression de la zone rendue étanche à l'aide de l'outil.

## Revendications

1. Méthode d'intervention sur la paroi d'une canalisation de fluide à l'aide d'un outil (1) comprenant un segment de conduite (100) et au moins des premiers moyens de création d'une étanchéité (130, 135) et des deuxièmes moyens de création d'une étanchéité (120, 125), le procédé comprenant une étape de déplacement de l'outil (1) à l'intérieur de la canalisation jusqu'au positionnement du segment de conduite (100) au regard d'une zone (210) de la paroi de ladite canalisation, le procédé comprenant de plus une étape de création d'étanchéité en amont et en aval de ladite zone à l'aide respectivement des premiers et des deuxièmes moyens de création d'étanchéité (120, 125, 130, 135) pour rendre étanche une partie extérieure (320) d'un tronçon de la canalisation autour de ladite zone (210), puis une étape d'intervention sur ladite zone (210) de la paroi, et
au moins les premiers ou les deuxièmes moyens de création d'étanchéité (120, 125, 130, 135) sont en deux parties, définissant un sas (310, 330) d'étanchéité entre les deux parties desdits premiers ou deuxièmes moyens de création d'étanchéité, **caractérisé en ce que** le fluide continue de s'écouler à travers le segment de conduite pendant l'intervention,
dans lequel le segment de conduite est constitué de deux cylindres rigides reliés par un soufflet.

2. Méthode d'intervention selon la revendication 1, dans laquelle les premiers ou les deuxièmes moyens de création d'une étanchéité (120, 125, 130, 135), comprennent des joints d'étanchéité expansibles et rétractables, actionnés en expansion pour créer l'étanchéité et rétractés après l'intervention.

3. Méthode d'intervention selon la revendication 1 ou la revendication 2, dans laquelle l'outil est propulsé dans la canalisation (200) par le déplacement du fluide.

4. Méthode d'intervention selon l'une des revendications 1 à 3, dans laquelle le déplacement de l'outil (1) dans la canalisation (200) et l'actionnement des moyens d'étanchéité (120, 125, 130, 135) sont contrôlés à distance.

5. Méthode d'intervention selon l'une des revendications 1 à 4, dans laquelle le positionnement est effectué au moins à l'aide d'une butée (220) placée à l'intérieur de la canalisation (200), le procédé comprenant une étape préalable de percement sous charge de la canalisation (200) pour la mise en place de la dite butée (220).

6. Méthode d'intervention selon l'une des revendications 1 à 5, dans laquelle une décompression de ladite partie extérieure est effectuée à l'aide d'une vanne (242), le procédé comprenant une étape préalable de percement sous charge de la canalisation (200) pour la mise en place de ladite vanne (242).

7. Méthode d'intervention selon l'une des revendications 1 à 6, dans laquelle les moyens d'étanchéité (120, 125, 130, 135) sont utilisés afin de freiner le déplacement de l'outil (1) par frottement sur la paroi interne de la canalisation (200).

8. Méthode d'intervention selon l'une des revendications 1 à 7, dans laquelle les moyens d'étanchéité (120, 125, 130, 135) sont utilisés afin de maintenir l'outil (1) en position au regard de ladite zone par contact avec la paroi interne de la canalisation (200).

9. Méthode d'intervention selon l'une des revendications 1 à 8, dans laquelle l'étape d'intervention comprend une réparation par pastille soudée, une réparation par rechargement ou une soudure à la surface extérieure de la canalisation (200).

10. Méthode d'intervention selon l'une des revendications 1 à 9, comprenant une décompression de chacun des sas à l'aide d'une vanne.

11. Outil (1) pour intervention sur la paroi d'une canalisation (200) de fluide, comprenant un segment de conduite (100) à positionner à l'intérieur de la canalisation, et au moins des premiers moyens de création d'une étanchéité (130, 135) entre la paroi de la canalisation (200) et le segment de conduite (100), comprenant de plus au moins des deuxièmes moyens de création d'une étanchéité (120, 125) entre la paroi de la canalisation (200) et le segment de conduite (100) pour isoler du fluide circulant une partie extérieure (320) d'un tronçon de la canalisation (200), entre les deux moyens de création d'une étanchéité (120, 125, 130, 135), et
au moins les premiers ou les deuxièmes moyens de création d'étanchéité (120, 125, 130, 135) sont en deux parties, définissant un sas (310, 330) d'étanchéité entre les deux parties desdits premiers ou deuxièmes moyens de création d'étanchéité, **caractérisé en ce que** le segment de conduite permet au fluide de continuer de s'écouler à travers le segment de conduite pendant l'intervention,
dans lequel le segment de conduite est constitué de deux cylindres rigides reliés par un soufflet.

12. Outil (1) pour intervention selon la revendication 11, dans lequel les premiers ou les deuxièmes moyens de création d'une étanchéité (120, 125, 130, 135), comprennent des joints d'étanchéité expansibles et rétractables.

13. Outil (1) pour intervention selon l'une des revendications 11 ou 12, comprenant de plus des moyens de propulsion (140) réglables.

14. Outil (1) pour intervention selon l'une des revendications 11 à 13, comprenant de plus des moyens de propulsion (140) agencés pour utiliser le déplacement du fluide afin de déplacer l'outil.

15. Outil (1) pour intervention selon la revendication 14, dans lequel les moyens de propulsion (140) comprennent au moins un volet réglable installé dans le segment de conduite (100).

16. Outil (1) pour intervention selon l'une des revendications 11 à 15, comprenant de plus un système de guidage (110) du déplacement de l'outil à l'intérieur de la canalisation (200).

17. Outil (1) pour intervention selon la revendication 16, dans lequel le système de guidage (110) comprend au moins un galet ou un disque déformable à chaque extrémité du segment de conduite (100).

18. Outil (1) pour intervention selon l'une des revendications 11 à 17, comprenant un système de freinage de l'outil.

19. Outil (1) pour intervention selon l'une des revendications 11 à 18, comprenant un système de maintien de l'outil en position par contact avec la paroi interne de la canalisation.

20. Outil (1) pour intervention selon l'une des revendications 11 à 19, comprenant un système permettant la localisation et le contrôle de l'outil à distance.

## Patentansprüche

1. Interventionsverfahren an der Wand einer Fluidleitung mittels eines Werkzeugs (1), umfassend ein Leitungssegment (100) und mindestens erste Einrichtungen zum Erzeugen einer Abdichtung (130, 135) und zweite Einrichtungen zum Erzeugen einer Abdichtung (120, 125), das Verfahren umfassend einen Schritt eines Verlagerns des Werkzeugs (1) im Innern der Rohrleitung bis zur Positionierung des Leitungssegments (100) gegenüber einem Bereich (210) der Wand der Rohrleitung, das Verfahren zusätzlich umfassend einen Schritt zum Erzeugen einer Abdichtung stromaufwärts und stromabwärts von dem Bereichs jeweils mittels den ersten und den zweiten Einrichtungen zum Erzeugen einer Abdichtung (120, 125, 130, 135), um einen äußeren Teil (320) eines Abschnitts der Rohrleitung um den Bereich (210) herum abzudichten, und anschließend einen Interventionsschritt in dem Bereich (210) der Wand, und
wobei mindestens die ersten oder die zweiten Einrichtungen zum Erzeugen einer Abdichtung (120, 125, 130, 135) zweiteilig sind und eine Schleuse (310, 330) zum Abdichten zwischen den zwei Teilen der ersten oder den zweiten Einrichtungen zum Erzeugen einer Abdichtung definieren, **dadurch gekennzeichnet, dass** das Fluid während der Intervention weiterhin durch das Leitungssegment strömt,
wobei das Leitungssegment aus zwei starren Zylindern besteht, die durch einen Balg verbunden sind.

2. Interventionsverfahren nach Anspruch 1, wobei die ersten oder die zweiten Einrichtungen zum Erzeugen einer Abdichtung (120, 125, 130, 135) ausdehnbare und schrumpfbare Dichtungen umfassen, die zum Erzeugen der Abdichtung expandierend betätigt und nach der Intervention geschrumpft werden.

3. Interventionsverfahren nach Anspruch 1 oder 2, wobei das Werkzeug durch die Verdrängung des Fluids in der Rohrleitung (200) angetrieben wird.

4. Interventionsverfahren nach einem der Ansprüche 1 bis 3, wobei die Verlagerung des Werkzeugs (1) in der Rohrleitung (200) und die Betätigung der Abdichtungseinrichtungen (120, 125, 130, 135) ferngesteuert sind.

5. Interventionsverfahren nach einem der Ansprüche 1 bis 4, wobei die Positionierung zumindest mittels eines Anschlags (220) erfolgt, der im Inneren der Rohrleitung (200) platziert ist, das Verfahren umfassend einen vorherigen Schritt eines Durchbohrens der Rohrleitung (200) unter Last für das Anbringen des Anschlags (220).

6. Interventionsverfahren nach einem der Ansprüche 1 bis 5, wobei eine Druckentlastung des äußeren Teils mittels eines Ventils (242) erfolgt, das Verfahren umfassend einen vorherigen Schritt eines Durchbohrens der Rohrleitung (200) unter Last für das Anbringen des Ventils (242).

7. Interventionsverfahren nach einem der Ansprüche 1 bis 6, wobei die Abdichtungseinrichtungen (120, 125, 130, 135) verwendet werden, um die Verlagerung des Werkzeugs (1) durch Reibung an der Innenwand der Rohrleitung (200) abzubremsen.

8. Interventionsverfahren nach einem der Ansprüche 1 bis 7, wobei die Abdichtungseinrichtungen (120, 125, 130, 135) verwendet werden, um das Werkzeug (1) durch Kontakt mit der Innenwand der Rohrleitung (200) in Bezug auf den Bereich in Position zu halten.

9. Interventionsverfahren nach einem der Ansprüche 1 bis 8, wobei der Interventionsschritt eine Reparatur durch ein geschweißtes Pellet, eine Reparatur durch Auftragsschweißen oder ein Schweißen an der Außenfläche des Rohrs (200) umfasst.

10. Interventionsverfahren nach einem der Ansprüche 1 bis 9, umfassend eine Druckentlastung von jeder der Schleusen mittels eines Ventils.

11. Werkzeug (1) zur Intervention an die Wand einer Rohrleitung (200) für Fluid, umfassend ein Leitungssegment (100), das im Inneren der Leitung zu positionieren ist, und mindestens erste Einrichtungen zum Erzeugen einer Abdichtung (130, 135) zwischen der Wand der Rohrleitung (200) und dem Leitungssegment (100), ferner umfassend mindestens zweite Einrichtungen zum Erzeugen einer Abdichtung (120, 125) zwischen der Wand der Rohrleitung (200) und dem Leitungssegment (100), um einen äußeren Teil (320) eines Abschnitts der Rohrleitung (200) zwischen den zwei Einrichtungen zum Erzeugen einer Abdichtung (120, 125, 130, 135) von dem strömenden Fluid zu isolieren, und
wobei mindestens die ersten oder die zweiten Einrichtungen zum Erzeugen einer Abdichtung (120, 125, 130, 135) zweiteilig sind und eine Schleuse (310, 330) zum Abdichten zwischen den zwei Teilen der ersten oder der zweiten Einrichtungen zum Erzeugen einer Abdichtung definieren,
**dadurch gekennzeichnet, dass** das Leitungssegment es ermöglicht, dass das Fluid während der Intervention weiterhin durch das Leitungssegment strömt, wobei das Leitungssegment aus zwei starren Zylindern besteht, die durch einen Balg verbunden sind.

12. Werkzeug (1) zur Intervention nach Anspruch 11, wobei die ersten oder die zweiten Einrichtungen zum Erzeugen einer Abdichtung (120, 125, 130, 135), ausdehnbare und schrumpfbare Dichtungen umfassen.

13. Werkzeug (1) zur Intervention nach einem der Ansprüche 11 oder 12, zusätzlich umfassend einstellbare Antriebseinrichtungen (140).

14. Werkzeug (1) zur Intervention nach einem der Ansprüche 11 bis 13, zusätzlich umfassend Antriebseinrichtungen (140), die angeordnet sind, um die Verdrängung des Fluids zu nutzen, um das Werkzeug zu verlagern.

15. Werkzeug (1) zur Intervention nach Anspruch 14, wobei die Antriebseinrichtungen (140) mindestens eine einstellbare Klappe umfassen, die in dem Leitungssegment (100) installiert ist.

16. Werkzeug (1) zur Intervention nach einem der Ansprüche 11 bis 15, zusätzlich umfassend ein Führungssystem (110) der Verlagerung des Werkzeugs im Innern der Rohrleitung (200).

17. Werkzeug (1) zur Intervention nach Anspruch 16, wobei das Führungssystem (110) mindestens eine verformbare Rolle oder Scheibe an jedem Ende des Leitungssegments (100) umfasst.

18. Werkzeug (1) zur Intervention nach einem der Ansprüche 11 bis 17, umfassend ein Abbremssystem des Werkzeugs.

19. Werkzeug (1) zur Intervention nach einem der Ansprüche 11 bis 18, umfassend ein System, um das Werkzeug durch Kontakt mit der Innenwand der Rohrleitung in Position zu halten.

20. Werkzeug (1) zur Intervention nach einem der Ansprüche 11 bis 19, umfassend ein System, das die Lokalisierung und Steuerung des Werkzeugs aus einer Entfernung ermöglicht.

## Claims

1. An intervention method for acting on the wall of a fluid pipeline using a tool (1) comprising a pipe segment (100) and at least first sealing means (130, 135) and second sealing means (120, 125), the method comprising a step for moving the tool (1) inside the pipeline until the pipe segment (100) is positioned facing a zone (210) of the wall of said pipeline, the method also comprising a step for creating sealing upstream and downstream from said zone using first and second sealing means (120, 125, 130, 135) so as to seal off an outer portion (320) of a segment of the pipeline around said zone (210), then a step for acting on said zone (210) of the wall, and
at least the first or the second sealing means (120, 125, 130, 135) are in two portions so as to define a sealing lock (310, 330) between the two portions of said first or second sealing means,
**characterized in that** the fluid continues to flow through the pipe segment during the intervention,
wherein the pipe segment consists of two rigid cylinders connected by a bellows.

2. The intervention method according to claim 1, wherein the first or second sealing means (120, 125, 130, 135) comprise expandable and retractable sealing gaskets which are actuated in expansion to create the sealing and which are retracted after action has been taken.

3. The intervention method according to claim 1 or claim 2, wherein the tool is propelled in the pipeline (200) by the movement of the fluid.

4. The intervention method according to one of claims 1 to 3, wherein the movement of the tool (1) in the pipeline (200) and the actuation of the sealing means (120, 125, 130, 135) are remotely controlled.

5. The intervention method according to one of claims 1 to 4, wherein the positioning is performed at least using a stop (220) placed inside the pipeline (200), the method comprising a prior step for hot tapping the pipeline (200) in order to put said stop (220) into place.

6. The intervention method according to one of claims 1 to 5, wherein said outer portion is decompressed using a valve (242), the method comprising hot tapping the pipeline (200) in order to put said valve (242) into place.

7. The intervention method according to one of claims 1 to 6, wherein the sealing means (120, 125, 130, 135) are used to brake the movement of the tool (1) by rubbing against the inner wall of the pipeline (200).

8. The intervention method according to one of claims 1 to 7, wherein the sealing means (120, 125, 130, 135) are used to hold the tool (1) in position facing said zone by making contact with the inner wall of the pipeline (200).

9. The intervention method according to one of claims 1 to 8, wherein the intervention step comprises making a repair with a welded patch, a repair by build-out welding, or a repair by welding on an outside surface of the pipeline (200).

10. The intervention method according to one of claims 1 to 9, comprising decompressing each of the sealing locks using a valve.

11. An intervention tool (1) for taking action on the wall of a fluid pipeline (200), comprising a pipe segment (100) to be positioned inside the pipeline, and at least first sealing means (130, 135) between the wall of the pipeline (200) and the pipe segment (100), also comprising at least second sealing means (120, 125) between the wall of the pipeline (200) and the second pipe segment (100) to isolate an outer portion (320) of a segment of the pipeline (200) from fluid, between the two sealing means (120, 125, 130, 135), and
at least the first or the second sealing means (120, 125, 130, 135) are in two portions so as to define a sealing lock (310, 330) between the two portions of said first or second sealing means, **characterized in that** the pipe segment allows the fluid to continue to flow through the pipe segment during the intervention,
wherein the pipe segment consists of two rigid cylinders connected by a bellows.

12. The intervention tool (1) according to claim 11, wherein the first or the second sealing means (120, 125, 130, 135) comprise expandable and retractable sealing gaskets.

13. The intervention tool (1) according to one of claims 11 or 12, also comprising adjustable propulsion means (140).

14. The intervention tool according to one of claims 11 to 13, further comprising propulsion means (140) arranged to use the movement of the fluid so as to move the tool.

15. The intervention tool (1) according to claim 14, wherein the propulsion means (140) comprise at least one adjustable flap installed in the pipe segment (100).

16. The intervention tool (1) according to one of claims 11 to 15, further comprising a guide system (110) configured to guide the movement of the tool inside the pipeline (200).

17. The intervention tool (1) according to claim 16, wherein the guide system (110) comprises at least one wheel or deformable disk at each end of the pipe segment (100).

18. The intervention tool (1) according to one of claims 11 to 17, comprising a braking system configured to brake the tool.

19. The intervention tool (1) according to one of claims 11 to 18, comprising a system configured to hold the tool in position by contact with the inner wall of the pipeline.

20. The intervention tool (1) according to one of claims 11 to 19, comprising a system configured to enable the tool to be located and controlled remotely.
